# FASCICULE DE BREVET EUROPEEN

(11) **EP 3 974 133 B1**
(45) Date de publication et mention de la délivrance du brevet: **27.05.2026**
(21) Numéro de dépôt: 20306118.9
(22) Date de dépôt: 29.09.2020
(51) Int. Cl.: B27J 5/00, B65D 39/00

(54) **PROCÉDÉ DE FABRICATION DE BOUCHONS DESTINÉS À L EMBOUTEILLAGE DE VINS TRANQUILLES ET BOUCHONS CORRESPONDANTS**
VERFAHREN ZUR HERSTELLUNG VON KORKEN FÜR DIE FLASCHENABFÜLLUNG VON STILLWEINEN, UND ENTSPRECHENDE KORKEN
METHOD FOR MANUFACTURING BOTTLE CORKS INTENDED FOR THE BOTTLING OF STILL WINES AND CORRESPONDING BOTTLE CORKS

(43) Date de publication de la demande: 30.03.2022
(73) Titulaire: DIAM BOUCHAGE, 66400 Ceret (FR)
(72) Inventeur: TOURNEIX, Dominique, 66240 SAINT ESTEVE (FR); BAKALI, Moaad, 06006 BADAJOZ (ES)
(74) Mandataire: Casalonga

(56) Documents cités:
- FR-A- 354 991
- FR-A- 600 134
- FR-A- 631 221
- IT-A1- VI20 090 190

## Description

### Domaine technique

L'invention concerne un procédé de fabrication de bouchons, et un bouchon destiné à l'embouteillage de vin, selon le préambule de la revendication 11.

Le document FR 600 134 A divulgue les étapes de procédé suivantes, pour la fabrication de bouchons destinés à l'embouteillage de vins tranquilles:
On réalise au moins un parallelepipedeen joignant par l'intermédiaire d'un liant, une pluralité de lames de liège ainsi qu'au moins une lame latérale de liège sur chaque face de la pluralité de lames de liège laissant apparaître l'ensemble des lames de liège, le liant polyuréthane étant polymérisé par chauffage et sous pression, puis
- on forme au moins un bouchon à partir des parallélépipèdes polymérisés de sorte que les lames latérales de liège se trouvent aux extrémités des bouchons.

Le document FR 600 134 A divulgue **un** bouchon selon le préambule de la revendication 11.

### Etat de la technique antérieure

Le liège est un matériau naturel, imperméable et léger, qui provient de l'écorce de certaines espèces de chênes, telles que les chênes-lièges, qui se trouvent typiquement dans les pays du pourtour méditerranéen, en Europe et en Afrique du Nord.

Le liège trouve notamment son utilisation dans la fabrication de bouchons, qui servent à boucher des récipients tels que des bouteilles contenant des liquides destinés à l'alimentation, en particulier, du vin tranquille ou effervescent, de spiritueux ou d'autres boissons. Les bouchons sont produits soit par tubage de planches de liège, soit par reconstitution en utilisant du liège broyé et tamisé avec des polymères.

Le liège est un matériau élastique, résilient, comprimable, imperméable aux liquides et présentant un fort coefficient de friction. Sa structure offre une perméabilité aux gaz, dont l'échange d'oxygène utile à la maturation du produit en bouteille. La structure des bouchons en liège issue de tubage dont l'esthétique est très appréciée, est toutefois très variable entraînant la variabilité de ce passage d'oxygène.

A l'inverse, les bouchons reconstitués produits à partir de liège trituré en granulés, beaucoup plus homogènes en structure, présentent l'inconvénient majeur en terme esthétique de s'éloigner du visuel classique des bouchons dits « naturels » tubés directement dans la planche de liège. Enfin, bien que l'usage d'un liant polyuréthane ait montré, à l'appui de dossiers techniques très poussés sa totale idonéité, l'absence absolue d'oligomères de très faible poids moléculaire pouvant migrer dans le contenu n'est pas démontrable. Il en ressort que certains vignerons émettent des craintes à l'usage grandissant de ces bouchons reconstitués.

Différents documents ont été publiés pour tenter de résoudre à la fois l'enjeu esthétique et l'utilisation des parties de liège dont la taille ou le visuel ne permettent pas d'extraire un bouchon en liège naturel. Chaque document apporte une solution technique à l'emploi d'une partie du liège en cherchant à se rapprocher visuellement le plus possible d'un bouchon naturel traditionnel.

La profession a développé depuis longtemps, des bouchons en liège dénommés 1+1 dont les extrémités sont faites de rondelles de liège et le corps central de granulé de liège aggloméré. Ainsi, la profession a exploité le liège dénommé « liège mince » qui est la partie récoltée du liège non suffisamment épaisse pour pouvoir être destinée au tubage de bouchons naturels. Ces rondelles sont tubées dans le liège mince dans le sens « horizontal » de l'épaisseur du liège par opposition au sens « perpendiculaire » employé pour le tubage d'un bouchon naturel. On rappelle que le liège est la couche d'écorce d'un chêne liège. L'écorce s'épaissit avec la croissance de l'arbre et comprend un ensemble de puits et passages nommés lenticelles pour l'alimentation en sève depuis le tronc central.

La conséquence d'un recours au sens « horizontal » est que les lenticelles, présentes à l'intérieur de la couche de liège mince, traversent perpendiculairement la rondelle laissant autant de puits de passage pour l'oxygène à l'origine de variations importantes d'un bouchon à l'autre. Ce sont également des passages potentiels pour des oligomères provenant du liant. Dans le cas des bouchons à champagne pour lesquels deux rondelles sont superposées sur le côté au contact du vin, le risque du passage de composés volatils indésirables, est diminué mais non éliminé par cette superposition.

Une publication a ainsi émis des doutes sur la barrière physique aux migrations de composés issus du liant en raison de la présence de ces lenticelles (Mechanism of migration from agglomerated cork stoppers. Part 2: Safety assessment criteria of agglomerated cork stoppers for champagne wine cork producers, for users and for control laboratories, November 2003 Food Additives and Contaminants 20(10):960-71)

Un but de l'invention est de résoudre un problème identifié dans l'état de l'art des bouchons en liège non microagglomérés qui est la grande hétérogénéité de passage d'oxygène d'un bouchon à l'autre cette variation entrainant une différence d'évolution des vins. Il s'agit donc de réaliser des bouchons:
- étant visuellement proches des bouchons en liège traditionnels,
- étant homogènes,
- permettant une maîtrise du passage d'oxygène avec un écart type réduit d'un bouchon à l'autre
- évitant le contact du vin avec le liant polyuréthane maintenant ensemble les différentes parties, et
- et garantissant une absence de contamination par les anisoles provenant du liège.

### Exposé de l'invention

Un objet de l'invention est un procédé de fabrication de bouchons destinés à l'embouteillage de vins tranquilles, comprenant les étapes suivantes :
- on réalise des lames de liège et des lames latérales de liège à partir de liège de sorte que les lenticelles éventuellement présentes dans les lames de liège s'étendent parallèlement à l'épaisseur des lames tandis que celles dans les lames latérales de liège s'étendent perpendiculairement à l'épaisseur des lames, le liège ayant été préalablement écorcé de l'arbre puis bouilli,
- on réalise au moins un parallélépipède en joignant par l'intermédiaire d'un liant polyuréthane, une pluralité de lames de liège ainsi qu'au moins une lame latérale de liège sur chaque face de la pluralité de lames de liège laissant apparaitre l'ensemble des lames de liège, le liant polyuréthane étant polymérisé par chauffage et sous pression, puis
- on forme au moins un bouchon à partir des parallélépipèdes polymérisés de sorte que les lames latérales de liège se trouvent aux extrémités des bouchons

On peut inspecter par technique d'imagerie les lames de liège et/ou les lames latérales de liège avant le jointage de sorte à écarter celles présentant des trous, des veines sèches ou des tâches jaunes.

Entre la réalisation des lames et la formation des parallélépipèdes, on peut réaliser un nettoyage des lames de liège et des lames latérales de liège avec au moins un composé choisi parmi l'eau bouillante, la vapeur, un mélange de vapeur et d'alcool, un mélange de la vapeur et de dioxyde de carbone, un mélange de la vapeur et d'azote, et le dioxyde de carbone supercritique.

Pour nettoyer les lames de liège et les lames latérales de liège par exposition à du dioxyde de carbone supercritique, on peut les disposer dans un autoclave permettant d'atteindre une pression de 100 bars et une température de 60°C soit durant au moins deux heures, soit jusqu'à obtention d'un taux résiduel de 2,4,6-trichloroanisole inférieur à 0,3 ng/l.

Lors d'un nettoyage par exposition à du dioxyde de carbone supercritique, au moins une cage en maille fine peut comprendre du charbon actif et est disposée entre deux cages comprenant des lames de liège et/ou des lames latérales de liège de sorte à éviter une recontamination.

On peut former les bouchons par emboutissage ou usinage des parallélépipèdes.

Pour réaliser une pluralité de lames de liège, on encolle des lames de liège, avec un liant polyuréthane, puis on dispose ensuite les lames de liège jusqu'à atteindre une épaisseur prédéterminée, puis on découpe les lames de liège encollées de façon normale à la longueur des lames pour obtenir la pluralité de lames de liège.

Le liant polyuréthane peut comprendre des microsphères thermoexpansibles et/ou des microsphères de cire.

Pour réaliser une pluralité de lames de liège, on peut réaliser des étapes au cours desquelles : on encolle des lames de liège avec une émulsion de cire, puis on réalise l'élimination de l'eau comprise dans l'émulsion de cire par séchage, on les encolle avec un liant polyuréthane puis on dispose ensuite les lames de liège jusqu'à atteindre une épaisseur prédéterminée, puis on découpe les lames de liège encollées de façon normale à la longueur des lames pour obtenir la pluralité de lames de liège.

L'épaisseur prédéterminée de la pluralité de lames de liège peut être comprise entre 6 et 30 lames par bouchon formé dans un parallélépipède.

Une lame de liège latérale peut comprendre une épaisseur différente de l'épaisseur des lames de liège.

Un autre objet de l'invention est un bouchon destiné à l'embouteillage de vins tranquilles comprenant des lames de liège jointes latéralement par un liant polyuréthane de sorte à former une pluralité de lames de liège, les lames de liège étant disposées de sorte que leur épaisseur soit perpendiculaire à l'axe du bouchon, au moins une lame latérale de liège jointe par un liant polyuréthane à chaque face de la pluralité de lames de liège laissant apparaitre l'ensemble des lames de liège. Les lenticelles éventuellement présentes dans les lames de liège s'étendent parallèlement à l'épaisseur des lames tandis que celles dans les lames latérales de liège s'étendent perpendiculairement à l'épaisseur des lames, de sorte que toutes les lenticelles du bouchon soient disposées perpendiculairement à l'axe du bouchon afin de limiter la variation de la perméabilité à l'oxygène d'un bouchon à l'autre rencontrée dans les bouchons en liège traditionnels.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- [Fig 1] illustre les principales étapes du procédé de fabrication selon l'invention,
- [Fig 2] illustre une pluralité de lames de liège,
- [Fig 3] illustre le parallélépipède résultant de la polymérisation,
- [Fig 4] illustre l'emboutissage du parallélépipède polymérisé,
- [Fig 5] illustre les bouchons obtenus par le procédé de fabrication,
- [Fig 6] illustre l'évolution de la pression partielle en oxygène en mg d'O₂ dans les bouteilles en fonction du temps écoulé en jours pour des bouchons préparés selon le procédé de fabrication
- [Fig 7] illustre le résultat d'une étude comparative entre des bouchons préparés selon le procédé de fabrication et des bouchons en liège naturel produits classiquement.

### Description détaillée

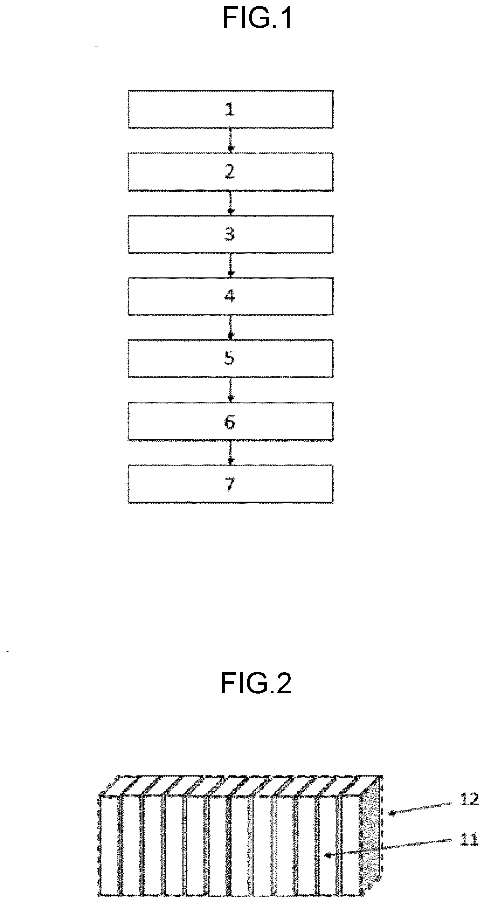

Le procédé de fabrication selon l'invention permet de résoudre les problèmes techniques identifiés dans l'état de l'art et est illustré par la figure 1.

Au cours d'une première étape 1, on réalise des lames de liège 11 et des lames latérales de liège 13 à partir de liège levé et bouilli..

Les lames de liège 11 présentent une épaisseur comprise entre 0,8mm et 2mm, et sont découpées de sorte que les lenticelles potentiellement présentes dans ces lames soient implantées parallèlement à l'épaisseur des lames. Les lenticelles traversent donc potentiellement les lames selon leur épaisseur.

De même, les lames latérales de liège 13, sont découpées de sorte que les lenticelles potentiellement présentes dans ces lames soient implantées perpendiculairement à l'épaisseur des lames. Aucune lenticelle ne traverse donc l'épaisseur de ces lames.

Comme on le verra plus bas dans le présent exposé, les lames de liège 11 et les lames latérales de liège 13 sont assemblées en parallélépipèdes dans lequel les bouchons sont formés. Les lames latérales de liège 13 permettent également de limiter la mise en contact du vin avec le liant polyuréthane employé, notamment en l'absence de lenticelles traversantes.

Dans un mode de réalisation particulier, les lames de liège 11 et/ou les lames latérales de liège 13 sont soumises à une inspection par imagerie, plus particulièrement par observation optique et/ou par la technique des rayons X pour identifier les lames de liège comprenant des veines sèches, des trous ou des taches jaunes. La présence de veines sèches peut rendre cassante la lame de liège affectée lors de compressions. Les taches jaunes dénotent un pourrissement local du liège où se concentrent beaucoup d'anisoles. S'ils ne sont pas comblés par le liant polyuréthane, les trous peuvent constituer un réservoir de 2,4,6-trichloroanisole (acronyme TCA) ou d'air modifiant la perméabilité du bouchon. S'ils sont comblés par le liant polyuréthane, ils peuvent contribuer à augmenter la quantité relative de polyuréthane par rapport à la quantité relative de liège, de sorte que le bouchon résultant pourrait ne pas satisfaire à la norme ISO633 spécifiant que la quantité relative de liant polymère dans un bouchon doit être inférieure à 35%m. Les lames affectées sont ainsi écartées.

Les lames latérales de liège 13 sont également choisies pour leur qualité visuelle selon les techniques traditionnelle de l'état de l'art.

Au cours d'une deuxième étape 2, on réalise le nettoyage des lames de liège 11 et des lames latérales de liège 13. Celui-ci peut être réalisé avec plusieurs composés, notamment avec au moins l'un parmi l'eau bouillante, la vapeur d'eau, la vapeur d'eau combinée à de l'alcool, la vapeur d'eau combinée à du CO₂, la vapeur d'eau combinée à de l'azote et le CO₂ supercritique. On rappelle qu'un composé est dit dans un état supercritique lorsqu'il est porté à une température supérieure à sa température critique et/ou à une pression supérieure à sa pression critique. La température critique et la pression critique diffèrent pour chaque composé.

Pour réaliser un tel nettoyage des lames de liège 11 et des lames latérales de liège 13 avant de les jointer, on les dispose dans des cages en inox dont les fonds sont constitués d'une maille fine pouvant laisser passer du CO₂ à l'état supercritique. Les cages sont ensuite disposées dans un autoclave permettant d'atteindre une pression de 100 bars et une température de 60°C durant plusieurs heures. A titre de référence, on rappelle que le CO₂ devient supercritique au-delà de 73,8 bars et de 31,1 °C.

Plusieurs cages peuvent être disposées l'une sur l'autre et des cages intermédiaires contenant du charbon actif peuvent être employées afin d'éviter de recontaminer le liège avec les composés volatils extraits par le CO₂ supercritique et son co-solvant eau vers des cages situées dans les niveaux supérieurs. Les temps de cycle sont définis, selon le taux de contamination initial, pour aboutir à un taux résiduel de 2,4,6-trichloroanisole (acronyme TCA) inférieur à 0,3 ng/l.

Au cours d'une troisième étape 3, on réalise des pluralités 12 de lames de liège par jonction des lames de liège 11, tel qu'illustrées par la figure 2. Pour les jointer entre elles, on les encolle avec un liant polyuréthane éventuellement mélangé à des microsphères thermoexpansibles ou de cire. On peut utiliser toute méthode d'enduction du liant, notamment au moyen d'un rouleau encolleur.

De telles microsphères thermoexpansibles sont décrites dans le brevet EP 0496687. Les microsphères permettent de réduire tout risque de migration du vin dans la structure interne du futur bouchon pouvant affaiblir ses propriétés mécaniques d'élasticité.

On dispose les lames de liège 11 jusqu'à atteindre l'épaisseur recherchée (généralement entre 6 et 30 lames par bouchon à former). On découpe ensuite les lames de liège 11 de façon normale à leur surface pour obtenir une pluralité 12 de lames de liège.

Dans un mode de réalisation particulier, dans le but de réduire la capacité des bouchons à absorber du vin à son contact, la troisième étape 3 débute par une pulvérisation d'une émulsion de cire (notamment, cire naturelle ou cire d'abeille) sur les lames de liège 11 puis leur séchage afin d'éliminer l'eau comprise dans l'émulsion de cire, notamment dans un four. Les lames de liège 11 alors obtenues sont ensuite encollées avec le liant polyuréthane.

Comme dans le premier mode de réalisation, on dispose ensuite les lames de liège 11 jusqu'à atteindre l'épaisseur recherchée de la pluralité 12 de lames de liège (généralement entre 6 et 30 lames par bouchon à former).

Au cours d'une quatrième étape 4, on encolle les faces de chaque pluralité 12 de lames de liège laissant apparaitre l'ensemble des lames de liège 11 de façon similaire à l'encollage réalisé à la quatrième étape 4.

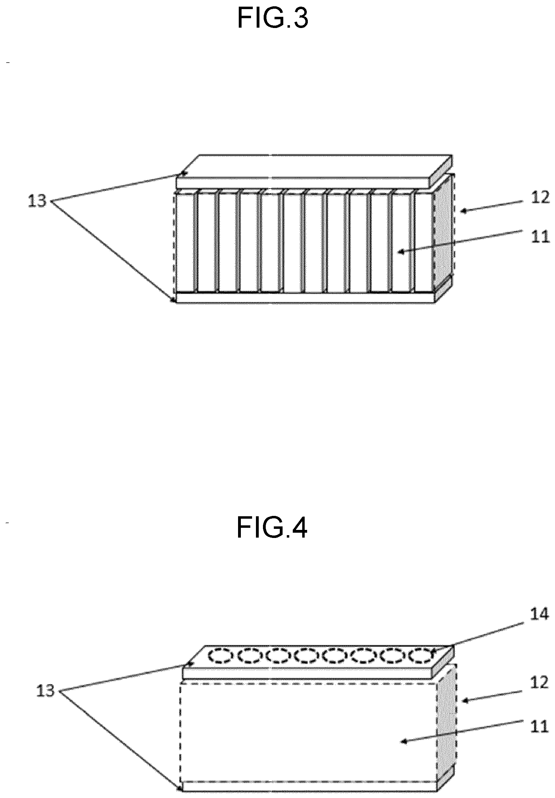

On dispose en regard de chacune de ces faces encollées une lame latérale de liège 13, de préférence d'une épaisseur de 2 mm, de sorte à obtenir un parallélépipède. La figure 3 illustre un tel parallélépipède.

On préfère ainsi l'encollage des faces des pluralités 12 de lames de liège à l'encollage des lames latérales de liège 13 pour s'assurer que ces lames, en contact avec le contenu de la bouteille, n'aient pas été exposées au liant polyuréthane. Les lames latérales de liège 13, dont les lenticelles ne sont pas traversantes font ainsi office de barrière à toute migration potentielle de composés issus du liant.

La hauteur totale du parallélépipède est réalisée pour correspondre à une longueur recherchée du bouchon qui sera embouti dans ce parallélépipède, de sorte qu'aux extrémités du bouchon, dénommées miroirs, on puisse voir une surface de liège non reconstituée formée par la lame latérale de liège 13 qui a été déposée.

Lors d'une cinquième étape 5, on dispose les parallélépipèdes façonnés, dans un moule dans lequel ils sont comprimés selon un rapport de compression de volume de 1,5 à 3 volumes dans un volume selon la qualité initiale du liège. L'ensemble est alors chauffé à une température généralement comprise entre 80 et 120°C pour une durée nécessaire à une bonne polymérisation et, le cas échéant, à l'expansion recherchée des microsphères. Le chauffage peut être réalisé dans un autoclave ou un four en continu.

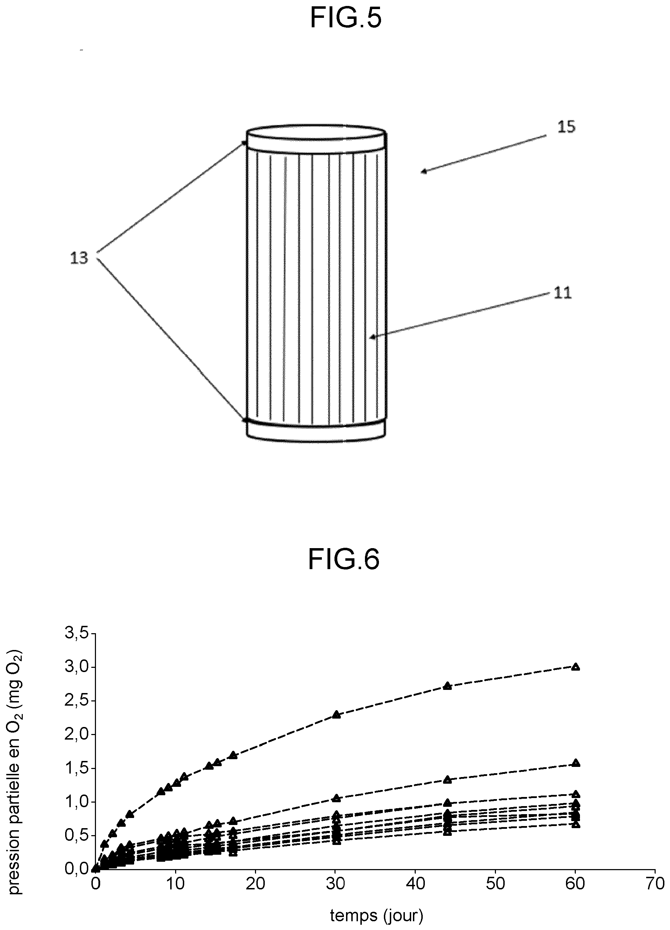

Lors d'une sixième étape 6, on emboutit ou on usine les parallélépipèdes polymérisés pour obtenir des bouchons aux diamètres souhaités. Les bouchons sont ensuite usinés de quelques dixièmes de millimètres pour obtenir une conformation parfaite au format commercialisable. La figure 4 illustre l'emboutissage du parallélépipède polymérisé, avec notamment la forme 14 représentant la limite entre la matière conservée et la matière retirée lors de l'emboutissage. La figure 5 illustre les bouchons 15 obtenus.

Enfin, lors d'une septième étape 7, on réalise un lavage des bouchons obtenus afin d'éliminer d'éventuels restes d'usinage ou d'emboutissage, puis on en contrôle la qualité par tri optique et pesage. Les bouchons conformes peuvent alors être marqués par laser ou induction et subir un satinage.

Ces différentes étapes comprises dans la septième étape 7 s'appliquent selon le besoin dans un ordre spécifique au produit fini souhaité.

Des études de l'évolution de la perméabilité à l'oxygène des bouchons ainsi produits ont été réalisées par chimiluminescence.

L'équipement utilisé est un Fibox 3 LCD Trace V6 de PreSens Precision Sensing GmbH. Le système est composé d'une sonde émettrice/réceptrice, qui émet un flux lumineux bleu. Ce flux est dirigé sur un capteur (appelé également pastille) collé à l'intérieur d'une bouteille transparente. Ces capteurs sont constitués de composés fluorescents, qui absorbent l'énergie lumineuse envoyée par la sonde, puis la restituent sous forme de lumière rouge. La mesure est basée sur le fait que le temps de restitution de cette lumière est inversement proportionnel à la concentration en oxygène dans la bouteille. Le résultat est exprimé en pression partielle d'oxygène à l'intérieur de la bouteille (PO₂). Cette méthode comporte plusieurs avantages : elle permet de suivre la cinétique d'entrée d'oxygène depuis le bouchage jusqu'à la fin de la conservation en bouteille, elle est non destructive, et enfin, la mesure est simple à effectuer et peut se faire sous différentes conditions (température, humidité, gradient de pression en oxygène) reproduisant celles d'une cave ou du stockage. Cette méthode est largement répandue dans la filière et a déjà fait l'objet de nombreuses publications pour une meilleure maîtrise des apports en oxygène en amont et durant l'embouteillage (Ugliano et al., 2015).

Les bouchons étudiés sont stabilisés au préalable en enceinte climatique pendant 48 h à 20 °C et 50 % d'humidité relative. Les bouteilles sont transparentes, avec une bague CETIE, dont le profil a été contrôlé conforme avant usage.

Avant bouchage, les bouteilles ont été équipées de pastilles Pst6 permettant des mesures de pression d'oxygène jusqu'à 41 hPa (= 41 mbar) avec une limite de détection de 0,02 hPa. Les bouteilles bouchées avec des bouchons naturels ont en plus été équipées de pastilles Pst3 permettant de mesurer des quantités d'oxygène beaucoup plus importantes (jusqu'à 500 hPa). Toutes les bouteilles ont été inertées à l'azote avant le bouchage puis bouchées sous vide avec une boucheuse GAI, modèle 4040, ce qui nous a permis d'atteindre des teneurs en oxygène résiduel inférieures à 0,1 mg/ bouteille (valeur retranchée par la suite dans les résultats)

La figure 6 illustre l'évolution de la pression partielle en oxygène en mg d'O₂ dans les bouteilles en fonction du temps écoulé en jours pour des bouchons préparés selon le procédé de fabrication décrit ci-dessus comprenant un empilement d'une dizaine de lames de 3mm et des lames de 1.5mm à chacune des extrémités.

Dix bouchons ont fait l'objet de mesures pour cette étude. Ils présentent en moyenne une pression partielle de 0.82 mg d'O₂ après un mois avec un écart type égal à 0.56.

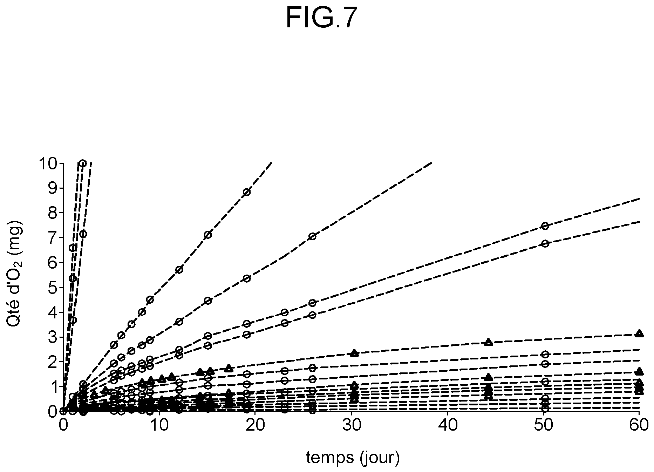

La figure 7 illustre le résultat d'une étude comparative entre des lots de bouchons préparés selon le procédé de fabrication (clef de graphique : Δ) et des bouchons en liège naturel produits classiquement (clef de graphique : ∘) vont maintenant être présentés.

Les bouchons en liège naturel produits par une méthode de fabrication ancestrale ont été choisis pour leur niveau de qualité visuelle haut de gamme impliquant un niveau de défauts de surface du bouchons réduit au minimum.

Les bouchons naturels présentent en moyenne une pression partielle de 4,7 mg d'O₂ après un mois avec un écart type égal à 10,8.

Les bouchons préparés selon le procédé de fabrication décrit ci-dessus correspondent aux bouchons dont les mesures de perméabilité sont illustrées par la figure 6 et présentent donc une pression partielle de 0.82 mg d'O₂ après un mois avec un écart type égal à 0.56.

Il apparait ainsi que la pression partielle d'O₂ après un mois pour des bouteilles bouchées par un bouchon produit selon le procédé de fabrication décrit ici est significativement inférieure à celle mesurée pour des bouteilles bouchées par un bouchon classique en liège plein.

Par ailleurs, la dispersion des mesures de pression partielle d'oxygène est bien plus restreinte, de sorte que les bouchons ainsi produits permettent un contrôle de l'oxygène admis, et donc du vieillissement homogène du contenu d'une bouteille à l'autre. Par opposition, les bouchons classiques en liège plein exposent le contenu à une variabilité très importante de l'oxygène admis d'une bouteille à l'autre, menant à une grande disparité dans le vieillissement d'un même vin dans ces bouteilles.

Ces essais montrent que les bouchons produits par le procédé de fabrication résolvent ainsi bien le problème technique de l'état de l'art en faisant preuve d'une faible perméabilité moyenne à l'oxygène, tout en présentant une dispersion réduite de la perméabilité.

De plus, le procédé de fabrication permet de s'assurer de la réduction ou l'absence de contamination par les anisoles et d'éviter le contact du vin avec le liant polyuréthane tant à l'issue de la fabrication que durant le vieillissement de la bouteille.

Enfin, la structuration du bouchon avec des lames latérales de liège, choisies éventuellement par inspection visuelle ou au rayons X, permet de s'assurer d'un aspect visuel lors de l'embouteillage ou lors du débouchage proche de celui d'un bouchon en liège plein.

## Revendications

1. Procédé de fabrication de bouchons destinés à l'embouteillage de vins tranquilles, comprenant les étapes suivantes :
- on réalise des lames de liège (11) et des lames latérales de liège (13) à partir de liège de sorte que les lenticelles présentes dans les lames de liège (11) s'étendent parallèlement à l'épaisseur des lames tandis que celles dans les lames latérales de liège (13) s'étendent perpendiculairement à l'épaisseur des lames, le liège ayant été préalablement écorcé de l'arbre puis bouilli,
- on réalise au moins un parallélépipède en joignant par l'intermédiaire d'un liant polyuréthane, une pluralité (12) de lames de liège ainsi qu'au moins une lame latérale de liège (13) sur chaque face de la pluralité (12) de lames de liège laissant apparaitre l'ensemble des lames de liège (11), le liant polyuréthane étant polymérisé par chauffage et sous pression, puis
- on forme au moins un bouchon à partir des parallélépipèdes polymérisés de sorte que les lames latérales de liège (13) se trouvent aux extrémités des bouchons.

2. Procédé de fabrication de bouchons selon la revendication 1, dans lequel, on inspecte par technique d'imagerie les lames de liège (11) et/ou les lames latérales de liège (13) avant le jointage de sorte à écarter celles présentant des trous, des veines sèches ou des taches jaunes.

3. Procédé de fabrication de bouchons selon l'une quelconque des revendications 1 ou 2, dans lequel entre la réalisation des lames et la formation des parallélépipèdes, on réalise un nettoyage des lames de liège (11) et des lames latérales de liège (13) avec au moins un composé choisi parmi l'eau bouillante, la vapeur, un mélange de vapeur et d'alcool, un mélange de la vapeur et de dioxyde de carbone, un mélange de la vapeur et d'azote, et le dioxyde de carbone supercritique.

4. Procédé de fabrication de bouchons selon la revendication 3, dans lequel pour nettoyer les lames de liège (11) et les lames latérales de liège (13) par exposition à du dioxyde de carbone supercritique, on les dispose dans un autoclave permettant d'atteindre une pression de 100 bars et une température de 60°C soit durant au moins deux heures, soit jusqu'à obtention d'un taux résiduel de 2,4,6-trichloroanisole inférieur à 0,3 ng/l.

5. Procédé de fabrication de bouchons selon l'une quelconque des revendications 1 à 4, dans lequel on forme les bouchons par emboutissage ou usinage des parallélépipèdes.

6. Procédé de fabrication de bouchons selon l'une quelconque des revendications 1 à 5, dans lequel, pour réaliser une pluralité (12) de lames de liège, on encolle des lames de liège (11) avec un liant polyuréthane, puis on dispose ensuite les lames de liège (11) jusqu'à atteindre une épaisseur prédéterminée, puis on découpe les lames de liège (11) encollées de façon normale à la longueur des lames pour obtenir la pluralité (12) de lames de liège.

7. Procédé de fabrication de bouchons selon la revendication 6, dans lequel le liant polyuréthane comprend des microsphères thermoexpansibles et/ou des microsphères de cire.

8. Procédé de fabrication de bouchons selon l'une quelconque des revendications 1 à 5, dans lequel, pour réaliser une pluralité (12) de lames de liège, on encolle des lames de liège (11) avec une émulsion de cire , puis on réalise l'élimination de l'eau comprise dans l'émulsion de cire par séchage, on les encolle avec un liant polyuréthane puis on dispose ensuite les lames de liège (11) jusqu'à atteindre une épaisseur prédéterminée, puis on découpe les lames de liège (11) encollées de façon normale à la longueur des lames pour obtenir la pluralité (12) de lames de liège.

9. Procédé de fabrication de bouchons selon l'une quelconque des revendications 6 à 8, dans lequel, l'épaisseur prédéterminée de la pluralité (12) de lames de liège est comprise entre 6 et 30 lames par bouchon formé dans un parallélépipède.

10. Procédé de fabrication de bouchons selon l'une quelconque des revendications 1 à 9, dans lequel une lame latérale de liège (13) comprend une épaisseur différente de l'épaisseur des lames de liège (11).

11. Bouchon destiné à l'embouteillage de vins tranquilles, **caractérisé par le fait qu'**il comprend
des lames de liège (11) jointes latéralement par un liant de sorte à former une pluralité (12) de lames de liège, les lames de liège (11) étant disposées de sorte que leur épaisseur soit perpendiculaire à l'axe du bouchon,
au moins une lame latérale de liège (13) jointe par un liant à chaque face de la pluralité (12) de lames de liège laissant apparaitre l'ensemble des lames de liège (11), **caractérisé en ce que**:
le liant est un liant polyuréthane
les lenticelles présentes dans les lames de liège (11) s'étendent parallèlement à l'épaisseur des lames tandis que celles dans les lames latérales de liège (13) s'étendent perpendiculairement à l'épaisseur des lames, de sorte que toutes les lenticelles du bouchon soient disposées perpendiculairement à l'axe du bouchon afin de limiter la variation de perméabilité à l'oxygène d'un bouchon à l'autre.

## Patentansprüche

1. Verfahren zur Herstellung von Korken, die für die Abfüllung von stillen Weinen bestimmt sind, das folgende Schritte umfasst:
- Herstellen von Korklamellen (11) und seitlichen Korklamellen (13) aus Kork, so dass sich die in den Korklamellen (11) vorhandenen Lentizellen parallel zu der Dicke der Lamellen erstrecken, während sich die in den seitlichen Korklamellen (13) senkrecht zu der Dicke der Lamellen erstrecken, wobei der Kork zuvor von dem Baum entrindet und dann gekocht wurde,
- Herstellen mindestens eines Quaders, indem mittels eines Polyurethan-Bindemittels eine Vielzahl (12) von Korklamellen sowie mindestens eine seitliche Korklamelle (13) auf jeder Seite der Vielzahl (12) von Korklamellen miteinander verbunden werden, wobei alle Korklamellen (11) sichtbar bleiben, wobei das Polyurethan-Bindemittel durch Erhitzen und unter Druck polymerisiert wird, und dann
- Bilden mindestens eines Korkens aus den polymerisierten Quadern, so dass sich die seitlichen Korklamellen (13) an den Enden der Korken befinden.

2. Verfahren zur Herstellung von Korken nach Anspruch 1, wobei die Korklamellen (11) und/oder die seitlichen Korklamellen (13) vor dem Zusammenfügen bildgebend untersucht werden, um solche mit Löchern, trockenen Adern oder gelben Flecken zu entfernen.

3. Verfahren zur Herstellung von Korken nach einem der Ansprüche 1 oder 2, wobei zwischen dem Herstellen der Lamellen und dem Bilden der Quader eine Reinigung der Korklamellen (11) und der seitlichen Korklamellen (13) mit mindestens einer Verbindung durchgeführt wird, die aus kochendem Wasser, Dampf, einer Mischung aus Dampf und Alkohol, einer Mischung aus Dampf und Kohlendioxid, einer Mischung aus Dampf und Stickstoff sowie überkritischem Kohlendioxid ausgewählt ist.

4. Verfahren zur Herstellung von Korken nach Anspruch 3, wobei zum Reinigen der Korklamellen (11) und der seitlichen Korklamellen (13) durch Exposition gegenüber überkritischem Kohlendioxid diese in einen Autoklaven gegeben werden, der es ermöglicht, einen Druck von 100 bar und eine Temperatur von 60 °C entweder für mindestens zwei Stunden oder bis zum Erhalten eines Restgehalts von 2,4,6-Trichloranisol von weniger als 0,3 ng/l zu erreichen.

5. Verfahren zur Herstellung von Korken nach einem der Ansprüche 1 bis 4, wobei die Korken durch Stanzen oder Bearbeiten der Quader gebildet werden.

6. Verfahren zur Herstellung von Korken nach einem der Ansprüche 1 bis 5, wobei, um eine Vielzahl (12) von Korklamellen herzustellen, Korklamellen (11) mit einem Polyurethan-Bindemittel verklebt werden, dann die Korklamellen (11) so angeordnet werden, bis eine vorbestimmte Dicke erreicht ist, und dann die verklebten Korklamellen (11) senkrecht zu der Länge der Lamellen zugeschnitten werden, um die Vielzahl (12) von Korklamellen zu erhalten.

7. Verfahren zur Herstellung von Korken nach Anspruch 6, wobei das Polyurethan-Bindemittel thermisch ausdehnbare Mikrosphären und/oder Wachsmikrosphären umfasst.

8. Verfahren zur Herstellung von Korken nach einem der Ansprüche 1 bis 5, wobei, um eine Vielzahl (12) von Korklamellen herzustellen, Korklamellen (11) mit einer Wachsemulsion verklebt werden, dann das in der Wachsemulsion enthaltene Wasser durch Trocknen entfernt wird, sie mit einem Polyurethan-Bindemittel verklebt werden, dann die Korklamellen (11) so angeordnet werden, bis eine vorbestimmte Dicke erreicht wird, und dann die verklebten Korklamellen (11) senkrecht zu der Länge der Lamellen zugeschnitten werden, um die Vielzahl (12) von Korklamellen zu erhalten.

9. Verfahren zur Herstellung von Korken nach einem der Ansprüche 6 bis 8, wobei die vorbestimmte Dicke der Vielzahl (12) von Korklamellen zwischen 6 und 30 Lamellen pro Korken beträgt, der in einem Quader ausgebildet ist.

10. Verfahren zur Herstellung von Korken nach einem der Ansprüche 1 bis 9, wobei eine seitliche Korklamelle (13) eine andere Dicke als die Dicke der Korklamellen (11) umfasst.

11. Korken, der für die Abfüllung von stillen Weinen bestimmt ist, **dadurch gekennzeichnet, dass** er Korklamellen (11) umfasst, die seitlich durch ein Bindemittel zusammengefügt sind, so dass eine Vielzahl (12) von Korklamellen gebildet werden, wobei die Korklamellen (11) so angeordnet sind, dass ihre Dicke senkrecht zu der Achse des Korkens ist,
mindestens eine seitliche Korklamelle (13), die durch ein Bindemittel mit jeder Seite der Vielzahl (12) von Korklamellen zusammengefügt ist, wobei alle Korklamellen (11) sichtbar bleiben, **dadurch gekennzeichnet, dass**:
das Bindemittel ein Polyurethan-Bindemittel ist,
die in den Korklamellen (11) vorhandenen Lentizellen sich parallel zu der Dicke der Lamellen erstrecken, während sich die in den seitlichen Korklamellen (13) senkrecht zu der Dicke der Lamellen erstrecken, so dass alle Lentizellen des Korkens senkrecht zu der Achse des Korkens angeordnet sind, um die Schwankung der Sauerstoffdurchlässigkeit von Korken zu Korken zu begrenzen.

## Claims

1. A method for manufacturing bottle corks for the bottling of still wines, comprising the following steps:
- producing cork strips (11) and lateral cork strips (13) from cork such that the lenticels present in the cork strips (11) extend parallel to the thickness of the strips whereas those in the lateral cork strips (13) extend perpendicular to the thickness of the strips, the cork having been previously debarked from the tree then boiled,
- producing at least one parallelepiped by joining, via a polyurethane binder, a plurality (12) of cork strips as well as at least one lateral cork strip (13) on each face of the plurality (12) of cork strips revealing the set of cork strips (11), the polyurethane binder being polymerised by heating and under pressure, then
- forming at least one bottle cork from the polymerised parallelepipeds, such that the lateral cork strips (13) are located at the ends of the bottle corks.

2. The method for manufacturing bottle corks according to claim 1, wherein the cork strips (11) and/or the lateral cork strips (13) are inspected using imaging technology prior to assembly so as to reject those that have holes, dry veins or yellow stains.

3. The method for manufacturing bottle corks according to any of claims 1 or 2, wherein between producing the strips and forming the parallelepipeds, cleaning of the cork strips (11) and the lateral cork strips (13) is carried out with at least one compound chosen from boiling water, steam, a mixture of steam and alcohol, a mixture of steam and carbon dioxide, a mixture of steam and nitrogen, and supercritical carbon dioxide.

4. The method for manufacturing bottle corks according to claim 3, wherein to clean the cork strips (11) and the lateral cork strips (13) by exposure to supercritical carbon dioxide, they are placed in an autoclave capable of reaching a pressure of 100 bar and a temperature of 60°C either for at least two hours or until a residual content of 2,4,6-trichloroanisole of less than 0.3 ng/l is obtained.

5. The method for manufacturing bottle corks according to any of claims 1 to 4, wherein the bottle corks are formed by stamping or machining the parallelepipeds.

6. The method for manufacturing bottle corks according to any of claims 1 to 5, wherein, to produce a plurality (12) of cork strips, cork strips (11) are glued with a polyurethane binder, then the cork strips (11) are disposed until a predetermined thickness is reached, then the glued cork strips (11) are cut normal to the length of the strips to obtain the plurality (12) of cork strips.

7. The method for manufacturing bottle corks according to claim 6, wherein the polyurethane binder comprises thermoexpandable microspheres and/or wax microspheres.

8. The method for manufacturing bottle corks according to any of claims 1 to 5, wherein, to produce a plurality (12) of cork strips, cork strips (11) are glued with a wax emulsion, then the water comprised in the wax emulsion is removed by drying, they are glued with a polyurethane binder, then the cork strips (11) are disposed until a predetermined thickness is reached, then the glued cork strips (11) are cut normal to the length of the strips to obtain the plurality (12) of cork strips.

9. The method for manufacturing bottle corks according to any of claims 6 to 8, wherein the predetermined thickness of the plurality (12) of cork strips is between 6 and 30 strips per bottle cork formed in a parallelepiped.

10. The method for manufacturing bottle corks according to any of claims 1 to 9, wherein a lateral cork strip (13) has a different thickness from the thickness of the cork strips (11).

11. A bottle cork intended for the bottling of still wines, **characterised in that** it comprises cork strips (11) joined laterally by a binder so as to form a plurality (12) of cork strips, the cork strips (11) being disposed such that their thickness is perpendicular to the axis of the bottle cork,
at least one lateral cork strip (13) joined by a binder to each face of the plurality (12) of cork strips revealing the set of cork strips (11), **characterised in that**:
the binder is a polyurethane binder,
the lenticels present in the cork strips (11) extend parallel to the thickness of the strips whereas those in the lateral cork strips (13) extend perpendicular to the thickness of the strips, such that all the cork warts of the bottle cork are disposed perpendicular to the axis of the bottle cork in order to limit the variation of oxygen permeability from one bottle cork to the other.
